# EUROPEAN PATENT SPECIFICATION

(11) **EP 1 154 684 B1**
(45) Date of publication and mention of the grant of the patent: **06.10.2004**
(21) Application number: 00913424.8
(22) Date of filing: 10.02.2000
(51) Int. Cl.: A01K 11/00

(54) **APPARATUS FOR AND METHOD OF INSTALLATION OF EAR TAGS**
VORRICHTUNG UND VERFAHREN ZUM EINBRINGEN VON OHRMARKEN IN TIEROHREN
APPAREIL ET PROCEDE DE POSE DE MARQUES D'OREILLES

(30) Priority: 24.02.1999 US 256565
(43) Date of publication of application: 21.11.2001
(73) Proprietor: RITCHEY, Eugene B., Brighton, CO 80601 (US)
(72) Inventor: RITCHEY, Eugene B., Brighton, CO 80601 (US)
(74) Representative: Ede, Eric
(86) International application number: PCT/US2000/003470
(87) International publication number: WO 2000/049856

(56) References cited:
- EP-A- 0 004 221
- EP-A- 0 044 769
- EP-A- 0 216 630
- GB-A- 2 114 045
- US-A- 3 900 925

## Description

### Technical Field

This invention relates to apparatuses for and methods of installing ear tags and, more particularly, to ear tag installation tools or installers which are used to attach tags to livestock animals.

### Background Art

A number of prior art devices exist which are used to install ear tags to livestock. One major consideration addressed by many of such devices is to provide an easy and efficient means by which a tag can be installed with minimal damage to the animal's ear. Another primary consideration previously addressed is to provide an ear tag that will remain securely fastened to the animal's ear and be placed in such a position that the indicia on the ear tag can be easily viewed. Yet another major consideration addressed is to provide structurally simple installation tools.

One group of prior art references disclosing ear tag applicators that address one or more of the preceding considerations are a number of U.S. patents to Gardner. Specifically, U.S. Patent No. 4,819,639 discloses an ear tag applicator comprising two pivotally connected handle members which are moved between an open and closed position to install an ear tag. One of the members includes a pivotal bar which has an ear tag mounted thereto. The other handle member stabilizes the ear and enables the ear tag to be placed through the ear by closing the handle members. U.S. Patent Nos. 4,552,147 and 5,462,554 also disclose tag applicators having pivotally connected handle members and a pivotal bar for mounting the ear tag. U.S. Patent No. 5,228,224 to Gardner further discloses one example of an ear tag which may be installed by one or more of the previous Gardner patents.

U.S. Patent No. 4,368,735 to Filmer is another example of a prior art reference disclosing two pivotal handle members and an ear piercing pin or bar member.

European Application No. 79400113.1 discloses a tool for attaching tags to the ears of animals, the tags being made of flexible material formed of two parts. The apparatus has parallel jaws (1A, 1B), a feed head (4) holding a rigid rod (6) which supports the shaft of the male part of the tag, pivoted around a shaft (5) parallel to the shaft (3) of rotation of the arms of the apparatus, the rigid rod (6) being rearwardly off center relative to the shaft. On the second jaw (IB) a recess (8) accommodates the female part (16) of the tag and a rigid auxiliary cone (12) for introduction of the male part of the tag into the female part which cooperates with the end of the rigid rod (6) of the first jaw, and with a duct for accommodating cones in the second jaw. The rocking of the feed head (4) makes it possible to attach the tags, and to fix the two assembled elements of the tag as well as to release them as soon as the animal first reacts.

The foregoing inventions are suitable for their intended purposes. However, one disadvantage to many prior art references is that cross contamination between livestock can occur when the ear tool applicator touches any portion of the animal's ear which has been pierced or cut by the applicator. Such cross contamination can result in unnecessarily diseased livestock which, in turn, can result in expensive and extensive treatment. Accordingly, one objective of the invention disclosed herein is to provide a means by which an ear tag can be installed minimizing cross contamination between animals.

It is another objective to provide an ear tag tool or installer which quickly and efficiently installs ear tags.

It is yet another objective of this invention to provide a method of installation whereby the ear tag is efficiently secured to the animal's ear by taking advantage of a resilient or spring-like feature of a neck portion of the tag or installer and activated by a slotted inserting member.

It is yet another object of this invention to provide an ear tag installation tool which incorporates the use of handle members with resiliently biased distal ends which greatly aid in the installation of the ear tag.

If sterility is not a concern in tag installation, it also contemplated by this invention that the installation tool installer may incorporate an inserting member which remains permanently attached to the handle members.

### Disclosure of the Invention

In accordance with the present invention, a pair of pivotal handle members are used in conjunction with a disposable inserting member which is attached to a pivoting head on one of the handle members. The inserting member includes a cutting element or tip which pierces the ear. A tab portion or locking member of the ear tag is removably connected to the inserting member. The distal ends of the handle members are placed around the animal's ear and are closed upon one another causing the inserting member to be inserted through the ear along with the tab portion or locking member of the ear tag. The resilient configuration of a neck portion of the tag attached to the tab portion causes the locking member to be easily stripped away from the inserting member once the inserting member clears the ear. The inserting member then falls away from the animal's ear leaving the ear tag securely fastened to the animal's ear by the locking member.

The ear tag installation tool may take advantage of handle members which each have resiliently biased ends which greatly assist in securing the ear tag to the animal's ear, as well as steadying the installation tool as it is operated to install the ear tag.

Other advantages of this invention will become apparent from a review of the following description taken in conjunction with the accompanying drawings.
Figure 1 is a fragmentary perspective view of another preferred embodiment of the ear tag installation tool of this invention;
Figure 2 is an exploded perspective view of the embodiment of Figure 15A further illustrating each of the major components;
Figure 3 is an enlarged fragmentary perspective view of a portion of the embodiment of Figure 1;
Figure 4 is another enlarged fragmentary perspective view of the embodiment of Figure 1 which may incorporate a permanently attached inserting member;
Figure 5 is another enlarged fragmentary perspective view of the embodiment of Figure 1 illustrating this embodiment incorporating a modified pin extension of the head which engages a modified inserting member;
Figure 6 is an enlarged fragmentary perspective view of the embodiment of Figure 1 illustrating an ear tag mounted thereto;
Figure 7 is a fragmentary vertical section, taken along line 1-7 of Figure 1 illustrating an ear tag mounted to the ear tag installation tool and further illustrating the tool installing the ear tag as the inserting member begins to penetrate the animal's ear;
Figure 8 is another fragmentary vertical section further illustrating the inserting member continuing to penetrate the animal's ear as the handle members are moved toward the closed position;
Figure 9 is another fragmentary vertical section illustrating the handle members being moved to the closed position;
Figure 10 is another fragmentary vertical section illustrating the handle members being moved back toward the open position causing the inserting member to be stripped away from the ear tag and resulting in one portion of the ear tag positioned on one side of the ear, and the remaining portions of the ear tag being positioned on the other side of the ear;
Figure 11 is yet another fragmentary vertical section which illustrates the handle members as they are further moved toward the open position and showing the ear tag as it appears after installation;
Figure 12 is an enlarged vertical section taken line 12-12 of Figure 18 showing the prong extensions in relation to the inserting member just as the inserting member begins to pass through the prong extensions;
Figure 13 is an enlarged vertical section taken along line 13-13 of Figure 8 illustrating the prong extensions being spread apart as the inserting member is passed between the prong extensions;
Figure 14 is an enlarged vertical section taken along line 14-14 of Figure 9 illustrating the prong extensions being fully spread apart and further illustrating the inserting member being rotated when the handle members are placed in the closed position;
Figure 15 is a vertical section taken along line 15-15 of Figure 7 illustrating the support extensions which surround and secure the inserting member;
Figure 16 is a section taken along line 16-16 of Figure 9 illustrating the inserting member being rotated when the handle members are in the closed position resulting in the support extensions being spread apart;
Figure 17 is a enlarged fragmentary perspective view showing the handle members in the closed position resulting in the inserting member being rotated;
Figure 18 is a fragmentary exploded perspective view of a modified inserting member, and an ear tag which may be used with the ear tag installation tool of Figure 5; and
Figure 19 is another enlarged vertical section, similar to the enlarged vertical section of Figure 12, illustrating a modification to the prong extensions in the form of curved or crescent shaped slots formed on the inner opposed surfaces of the prong extensions.

### Best Mode for Carrving Out The Invention

An ear tag installation tool 200 includes a pair of handle members, namely, first handle member 202 and second handle member 204. These handle members are pivotally connected by pin 206. A spring 208 may traverse between the handle members in order to place them in a normally open position, and to provide a biasing force as the handle members are moved to a closed position. As shown, the center coiled portion of the spring 208 may rest on pin 206, and the free ends of spring 208 may extend along the proximal ends of the handle members.

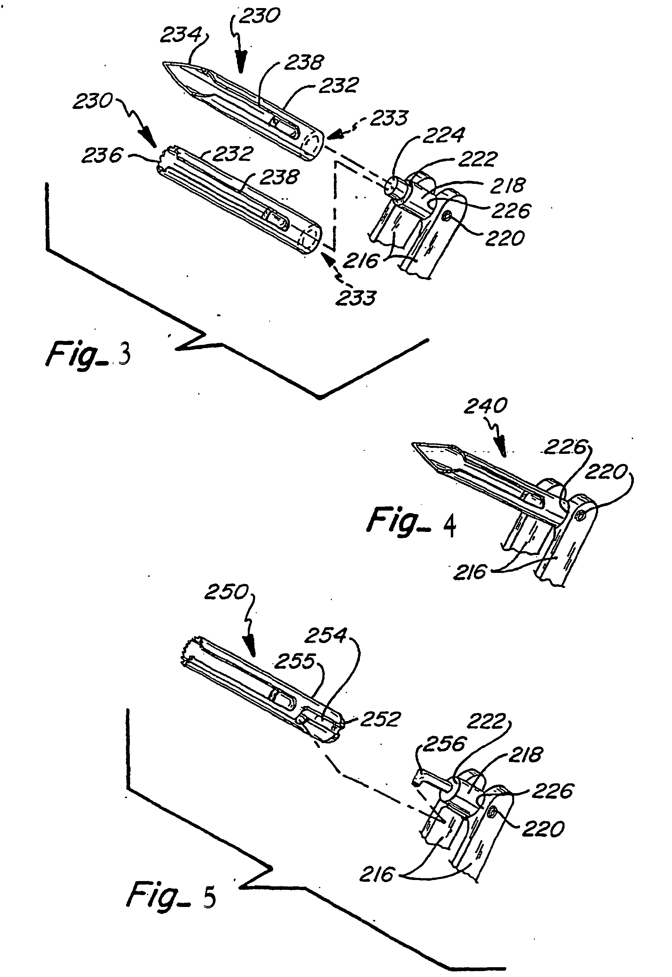

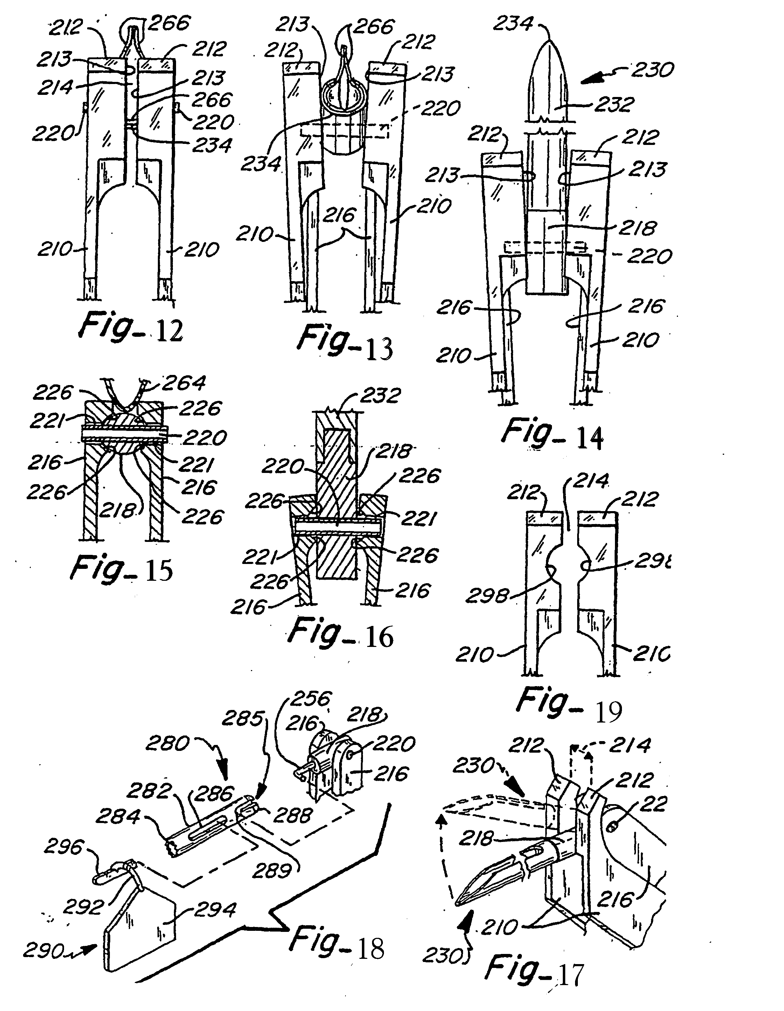

The distal end of the first handle member 202 may include a pair of spaced support extensions 216. An inserting head 218 is mounted at the free or distal ends of the support extensions 216 by pin 220. Inserting head 218 may include a head extension 224 having a smaller cross sectional area or diameter resulting in the formation of shoulder 222. As best seen in Figure 3 and Figures 15 and 16, support extensions 216 include curved or crescent shaped slots 226 formed on their inner opposed surfaces which conform to the shape of inserting head 218. Pin 220 is rigidly mounted within inserting head 218. However, pin 220 may freely slide within channels 221 formed through support extensions 216, as best seen in Figures 15 and 16. The need for pin 220 to be able to slide within channels 221 is further discussed below.

Second handle member 204 includes a pair of receiving prongs 210 formed at the distal end thereof. Receiving prongs 210 have a pair of corresponding prong extensions 212 which extend from the receiving prongs 210. Prong extensions 212 are spaced from one another at a desired distance forming a gap 214..

An inserting member 230 is removably connected to inserting head 218 by inserting head extension 224 in the opening 233 formed at the proximal or trailing end of inserting member 230. The prong extensions 212 are in a normal position prior to contact with the inserting member 230. The inserting member 230 may be more specifically defined as including a cylindrical body portion 232 with a cutting tip 234 formed at the distal end thereof. A longitudinal slot 238 is formed in body portion 232 in order to receive a portion of the ear tag as discussed further below.

As shown in Figure 4 if sterility is not of particular concern, the inserting head 218 and the inserting member 230 may be formed as one integral part shown as head/inserting member 240. Head/inserting member 240 remains permanently attached to the installation tool during operation.

Figure 5 illustrates another modified inserting member 250 which may include a chamfered proximal edge 252. This chamfered edge 252 assists in stripping the inserting member 250 away from the installation tool during operation, as also further discussed below. Inserting member 250 has a solid proximal portion 255 and an L-shaped slot or groove 254 formed thereon. Thus, this inserting member 250 has no proximal opening like opening 233 in inserting member 230. Accordingly, the inserting head 218 may include an L-shaped head extension 256 which is received in the L-shaped slot 254. Slot 254 and modified head extension 256 allow mounting of the inserting member 250 to the inserting head 218 in a sideways or transverse fashion as opposed to mounting achieved by axially aligning the inserting member with the inserting head. Additionally, the slot 254 and head extension 256 allow the inserting member 250 to remain attached during installation of the ear tag because the extension 256 remains trapped in slot 254; however, the inserting member may still be replaced as needed.

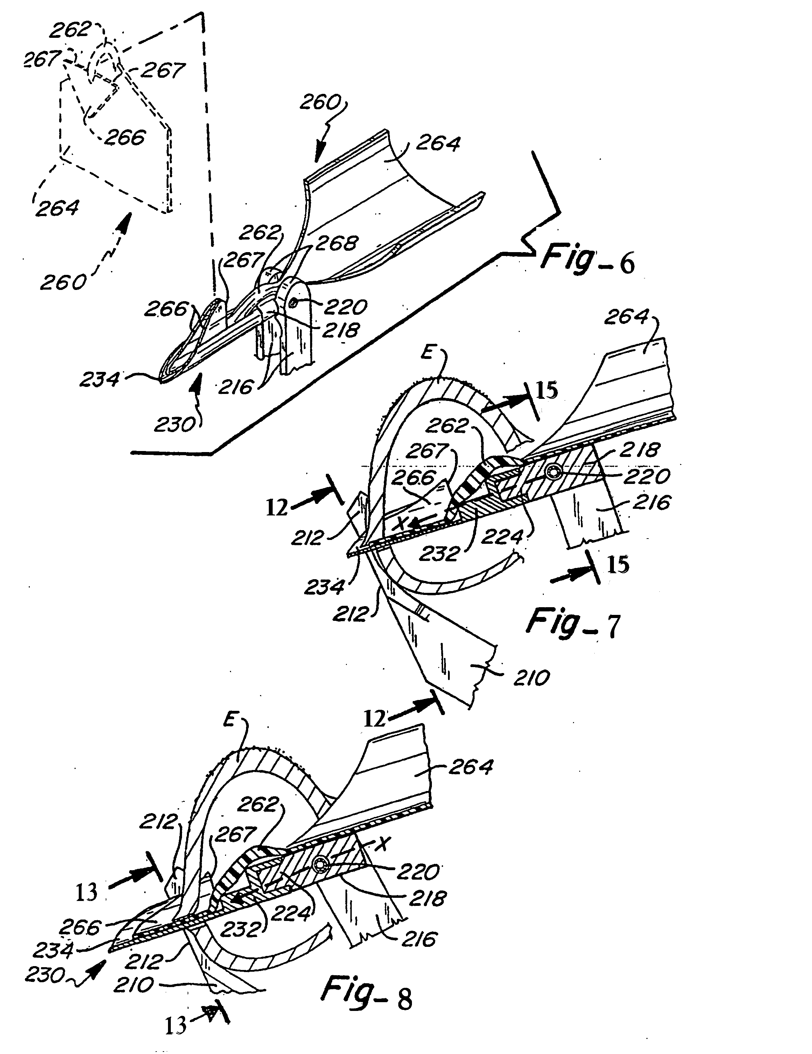

As shown in Figure 6, the ear tag installation tool 200 may be used to install an arrowhead-type ear tag 260. This particular type of ear tag 260 is characterized as having a curved and resilient neck 262 which interconnects a panel 264 and an arrowhead 266. The arrowhead 266 has a trailing edge 267 which has an important function when the ear tag is installed as further discussed below.

The operation of the ear tag installation tool 200 will now be explained when using inserting member 230. As shown in Figure 6, arrowhead 266 is folded and placed within slot 238. Neck 262 is straightened so that it extends between the free distal ends 268 of support extensions 216 that extend above inserting head 218. The mounting of the ear tag in this manner helps keep it aligned during installation.

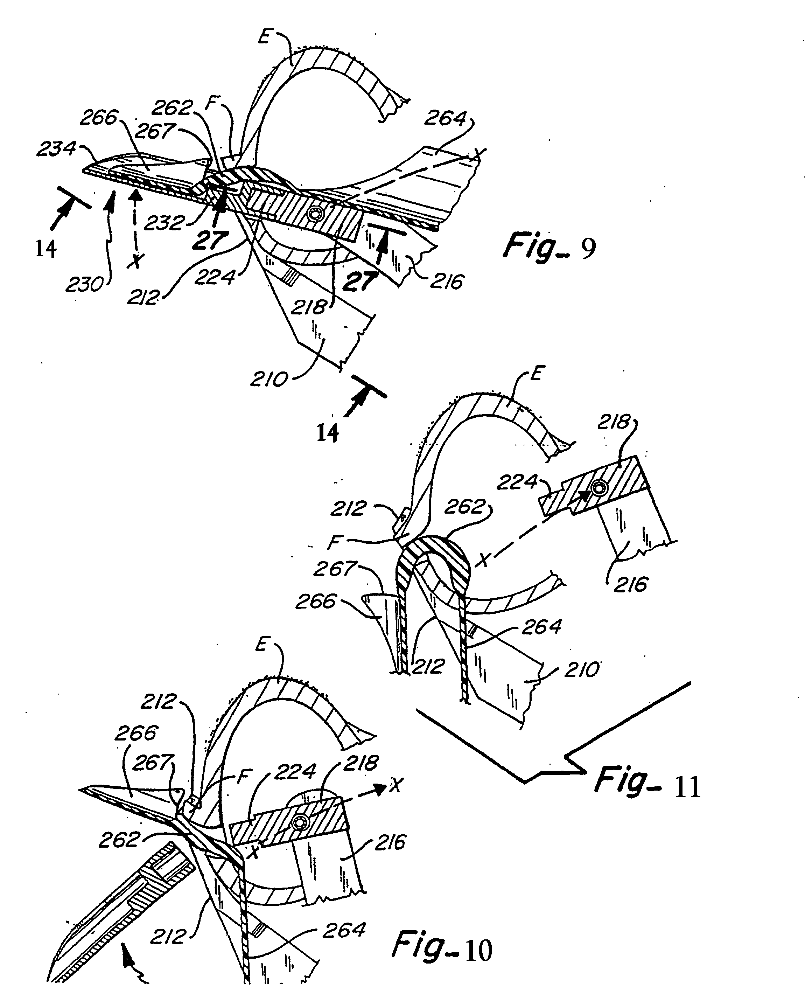

As shown in Figure 7, as the handle members are squeezed together, cutting tip 234 begins to penetrate the ear E. As shown in Figure 8, as the handle members continue to be moved to the closed position, inserting member 230 continues to penetrate the ear and move between prong extensions 212. Prong extensions 212 are forced apart because the cross sectional area of inserting member 230 is larger than the gap 214. Figures 12 and 13 also show how prong extensions 212 are forced apart by the movement of inserting member 230. The inner opposed surfaces 213 of prong extensions 212 exert a biasing force against the opposed exterior sides of inserting member 230. The contact between the inner opposed surfaces 213 of prong extensions 212 and inserting member 230 helps to stabilize the inserting member as it inserted through the ear, and also helps to stabilize the portion of the ear that is being pierced by the inserting member. Because of the contact between the inner opposed surfaces 213 of . prong extensions 212 and the exterior sides of inserting member 230, the tissue of the ear is kept taut which allows the inserting member to penetrate the ear with minimal slippage and tension force on the ear which, therefore, minimizes tissue damage.

As the handle members are moved to the closed position, as shown in Figure 9, the inserting member 230 is rotated about pin 220 so that the cutting tip 230 extends in the direction of the closed handle members. At this point, the inserting member 230 has been inserted to its fullest extent through the ear resulting in a flap of ear tissue F being formed. Once the trailing edge 267 of arrowhead 266 clears the opposite side of the ear E, the handle members may be released which causes them to move back toward the open position due to the biasing force of spring 208. As shown in Figure 10, trailing edge 267 contacts the opposite side of the ear E at or near flap F which assists in stripping the inserting member 230 away from inserting head 218. Additionally, because the inner opposed surfaces 213 of prong extensions 212 maintain contact with the inserting member 230, this also helps allow the inserting head 218 to be separated from the inserting member 230 as the handle members move back to the open position. Once separation between head 218 and inserting member 230 has occurred, inserting member 230 falls freely away from the ear and the installation tool.

Figure 11 shows the tag 260 as the resilient neck 262 is no longer stressed by its engagement with the installation tool, which allows the arrowhead 266 to rotate back to its normal position. At this point, the installation tool may simply be pulled away from the ear.

One important aspect of the invention is the way in which the inserting head 218 dislocates from its normal position with respect to the surrounding support extensions 216. As seen in Figure 15, prior to and when the inserting member 230 initially makes contact with the ear E, inserting head 218 resides in the conforming opening formed by slots 226 of support extensions 216. This position of the inserting member 230 within support extensions 216 ensures that the inserting member 230-will not undesirably rotate or otherwise move as the inserting member begins to cut the ear tissue. Once the cut has begun to be made within the ear tissue, the inserting head with attached inserting member is allowed to rotate. This rotation results in the inserting member sliding distally along the inner opposed surfaces 213 of the prong extensions 212. Without the inserting head being able to rotate, this would force the inserting member to maintain a straighter path through the prong extensions which would also cause them to be spread further apart because the inserting member would otherwise slide more in a proximal direction. Thus, the above-identified advantages of having biased prong extensions is maintained without requiring the user of the tool to use excessive force in order to move the handle members to the closed position which might otherwise occur if the inserting head was not allowed at least some rotational capability. In accordance with this rotational capability, as mentioned above, pin 220 is rigidly affixed to inserting head 218; however, pin 220 is allowed to freely slide within the channels 221 which allows the dislocation of the inserting head 218 out of slots 226, as best seen in Figure 227. Figure 17 also illustrates this rotation of the inserting head 218 as the handle members are moved toward the closed position.

If the inserting member includes chamfered edges 252, as shown in Figure 5, these chamfered edges also assist in stripping the inserting member away from the inserting head. More specifically, when the ear tag installation tool reaches the stage shown in Figure 9, the chamfered edges 252 will have cleared the exterior side of the prong extensions 212. As the handle members are moved back to the open position, the resiliently biased prong extensions will have moved back toward one another in their normal position and which, therefore, causes the bevel in the chamfered edges to serve as a stop preventing the inserting member from being pulled back through the prong extensions. This chamfered edge may be particularly useful when the arrowhead-type ear tag has a longer neck which will not allow the trailing edge 267 to contact the opposed side of the ear until the handle members are moved to a more open position. Accordingly, the chamfered edges themselves can initially serve to strip the inserting member from the inserting head.

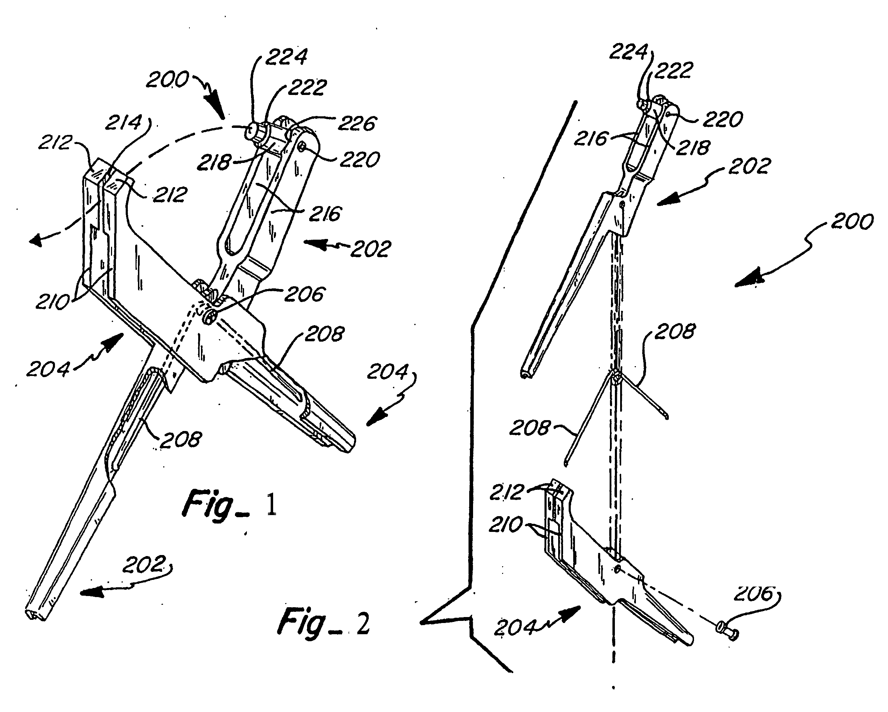

Figure 18 illustrates another type of ear tag which may be installed with the ear tag installation tool of Figures 1-4 and 5. This ear tag 290 is characterized by a curved neck portion 292 which interconnects a base or panel 294 and a transverse tab or locking member 296. When using this type of ear tag 290, it is advantageous to use a modified inserting member 280. This inserting member 280 has a body portion 282 with a closed ended slot 286 formed thereon. A cutting tip 284 is formed at distal end, and an opening 285 for receiving the inserting head 218 is formed at the proximal end. Optionally, as discussed with reference to Figure 5, the inserting member 280 may also include a chamfered edge 288 and an additional slot 289 to receive modified head extension 256.

As shown in Figure 19, the prong extensions 212 may be modified to include curved or crescent shaped slots 298 formed on their inner opposed surfaces. The purpose of these slots 298 is to reduce the amount of hand pressure necessary to move the handle members toward the closed position since the slots conform to the shape of the inserting member placed therethrough which does not require the prong extensions to be separated so far apart. Also, the increased surface area in contact between the inserting member and the inner surfaces of the prong extensions allows the inserting member to be stripped away from the inserting head as the handle members move back to the open position. Additionally, slots 298 can be shaped to allow the inserting head 218 to rotate. The more pronounced slots 298 are, the more hand force is needed to cause inserting head 218 to slide distally between the inner surfaces of the prong extensions because the inserting head will have a tendency to remain in the slots 298.

The operation of tool 200 is the same as described above when using inserting members 240 and 250 with the exception that these inserting members remain attached to the tool during tag installation. As set forth above, inserting member 250 may be replaced when the tool is not being used by simply removing extension 256 from L-shaped slot 254.

## Claims

1. An ear tag tool (200) for installing an ear tag (260) on an ear (E) of an animal, said tool comprising, a first handle member (204) having proximal and distal ends, a second handle (202) member having proximal and distal ends, and pivotally connected to said first handle member so that said handle members are movable between an open position and a closed position, a head (218) pivotally connected to said distal end of said second handle member, **characterized in that** said tool further includes:
an inserting member (230, 240, 250) having a distal cutting end (234, 236) and a proximal end connected to said head (218), said inserting member being adapted to receive a portion of the ear tag (E) during installation; and
said first handle member (204) having first resilient means (210) formed at said distal end thereof for receiving said inserting member (230, 240, 250) therethrough, said first resilient means (210) being spread apart in response to said inserting member being inserted therethrough during installation of the ear tag (E).

2. A tool, as described in claim 1, wherein:
said second handle member (202) includes second resilient means (216) at said second end thereof and being spread apart in response to pivoting of said head (218) as said inserting member (230 240, 250) is inserted through said first resilient means (210).

3. A tool, as claimed in claim 1, wherein:
said inserting member (230, 240, 250) includes a slot (238) formed thereon to receive the portion of the ear tag (E).

4. A tool, as claimed in claim 1, further including:
a spring member (208) traversing between said first and second handle members (204, 202) for urging said handle members to the open position, and providing a resilient force against said handle members when they are moved to the closed position.

5. A tool, as claimed in claim 1, wherein:
said proximal end of said inserting member (230, 240, 250) includes a chamfered edge (252).

6. A tool, as claimed in claim 1, wherein:
said first resilient means (210) include slots (298) formed thereon which conform in shape to said inserting member when inserted therethrough.

7. A tool, as claimed in claim 1, wherein:
said inserting member (230, 240, 250) is cylindrical shaped.

8. A tool, as claimed in claim 1, wherein:
said head (218) further includes a head extension (224) extending therefrom; and
said inserting member (230, 240, 250) includes a second slot (254) sized to receive said head extension (224).

9. A method of installing an ear tag (260) onto the ear (E) of an animal, said method including providing a pair of handle members (202), 204) having first and second distal ends movable between an open position in which the distal ends are spaced apart and a closed position in which said distal ends are adjacent each other, attaching an inserting member (230, 240, 250) to the first distal end of the pair of handle members (202, 204), **characterized in that** said method further includes the step of:
connecting a portion (266, 296) of the ear tag (260) to the inserting member (230, 240 250);
positioning the handle members (202, 204) in the open position with the first distal end on one side of the ear (E) and the second distal end on the other side of the ear (E);
moving the handle members (202, 204) toward the closed position so that the inserting member (230, 240, 250) is inserted through resiliently biased prong extensions (212) on the second distal end of the pair of handle members;
spreading the resiliently biased prong extensions (212) apart as the handle members (202, 204) are moved to the closed position so that the inserting member (230, 240 250) penetrates the ear (E) and results in the portion (266, 296) of the ear tag (260) attached to the inserting member (230, 240, 250) being passed through an opening cut in the ear (E); and
stripping the portion (266, 296) of the ear tag (260) away from the inserting member (230, 240, 250) after the portion (266, 296) of the ear tag (260) passes through the opening cut through the ear (E).

10. A method, as claimed in claim 9, further comprising the step of:
releasing the inserting member (230, 240, 250) from the handle members (202, 204) after said stripping step.

11. A method, as claimed in claim 9, further comprising the step of:
pivoting the inserting member (230, 240, 250) as it is inserted through the resiliently biased prong extensions (212).

12. A method, as claimed in claim 9, further comprising the step of:
spreading resiliently biased support extensions (216) located at the first distal end of the pair of handle members (202, 204) in response to the inserting member (230, 240, 250) as it is inserted through the prong extensions (212).

## Patentansprüche

1. Ohrmarken-Werkzeug (200) für das Anbringen einer Ohrmarke (260) an einem Ohr (E) eines Tieres, wobei das Werkzeug folgendes umfasst: ein erstes Griffelement (204) mit einem proximalen und einem distalen Ende, ein zweites Griffelement (202) mit einem proximalen und einem distalen Ende, das mit dem ersten Griffelement gelenkig verbunden ist, so daß die Griffelemente zwischen einer offenen Position und einer geschlossenen Position bewegt werden können, einen mit dem distalen Ende des zweiten Griffelements gelenkig verbundenen Kopf (218), **dadurch gekennzeichnet, dass** das Werkzeug weiterhin folgendes aufweist:
ein Einführelement (230, 240, 250) mit einem distalen Schneidende (234, 236) und einem mit dem Kopf (218) verbundenen proximalen Ende, wobei das Einführelement dafür ausgelegt ist, beim Anbringen einen Teil der Ohrmarke (E) aufzunehmen,
wobei das erste Griffelement (204) an seinem distalen Ende erste federnde Mittel (210) besitzt, die das Einführelement (230, 240, 250) zwischen sich aufnehmen und als Reaktion darauf, dass das Einführelement beim Anbringen der Ohrmarke (E) durch sie hindurchgeführt wird, auseinandergespreizt werden.

2. Werkzeug nach Anspruch 1. bei dem das zweite Griffelement (202) an seinem zweiten Ende zweite federnde Mittel (216) aufweist, die als Reaktion auf das Schwenken des Kopfes (218) beim Einführen des Einführelements (230. 240. 250) durch die ersten federnden Mittel (210) auseinandergespreizt werden.

3. Werkzeug nach Anspruch 1. bei dem das Einführelement (230. 240, 250) einen daran ausgebildeten Spalt (238) für das Aufnehmen des Teils der Ohrmarke (E) aufweist.

4. Werkzeug nach Anspruch 1, das weiterhin ein Federelement (208) aufweist, das zwischen dem ersten und dem zweiten Griffelement (204. 202) ausschwenkt. um die Griffelemente in die offene Position zu drängen. und eine Federkraft gegen die Griffelemente bereitstellt. wenn diese in die geschlossene Position bewegt werden.

5. Werkzeug nach Anspruch 1, bei dem das proximale Ende des Einführelements (230, 240, 250) eine abgeschrägte Kante (252) aufweist.

6. Werkzeug nach Anspruch 1. bei dem die ersten federnden Mittel (210) daran ausgebildete Spalte (298) aufweisen, die in ihrer Form mit dem Einführelement übereinstimmen, wenn dieses durch sie hindurchgeführt wird.

7. Werkzeug nach Anspruch 1, bei dem das Einführelement (230, 240, 250) zylinderförmig ist.

8. Werkzeug nach Anspruch 1. bei dem der Kopf (218) weiterhin einen sich davon erstreckenden Kopffortsatz (224) und das Einführelement (230, 240, 250) einen zweiten Spalt (254) aufweist, der so bemessen ist, dass er den Kopffortsatz (224) aufnimmt.

9. Verfahren für das Anbringen einer Ohrmarke (260) am Ohr (E) eines Tieres, wobei zu dem Verfahren folgendes gehört: Bereitstellen eines Paars Griffelemente (202, 204), deren erste und zweite distale Enden zwischen einer offenen Position, in der die distalen Enden voneinander beabstandet sind, und einer geschlossenen Position, in der die distalen Enden aneinander anstoßen, bewegt werden können, Befestigen eines Einführelements (230, 240, 250) am ersten distalen Ende des Paars Griffelemente (202, 204), **dadurch gekennzeichnet, dass** zu dem Verfahren weiterhin die folgenden Schritte gehören:
Verbinden eines Teils (266, 296) der Ohrmarke (260) mit dem Einführelement (230. 240. 250),
Positionieren der Griffelemente (202, 204) in der offenen Position. wobei sich ein distales Ende auf der einen Seite des 0hrs (E) und das zweite distale Ende auf der anderen Seite des 0hrs (E) befindet.
Bewegen der Griffelemente (202, 204) zur geschlossenen Position, so dass das Einführelement (230, 240, 250) durch federnd vorgespannte Spitzenverlängerungen (212) an dem zweiten distalen Ende des Paars Griffelemente hindurchgeführt wird, Auseinanderspreizen der federnd vorgespannten Spitzenverlängerungen (212), während die Griffelemente (202. 204) in die geschlossene Position bewegt werden, so dass das Einführelement (230, 240, 250) das Ohr (E) durchdringt, was dazu führt, dass der an dem Einführelement (230. 240. 250) befestigte Teil (266, 296) der Ohrmarke (260) durch eine in das Ohr (E) geschnittene Öffnung hindurchgezogen wird, und
Abstreifen des Teils (266. 296) der Ohrmarke (260) vom Einführelement (230. 240, 250), nachdem der Teil (266, 296) der Ohrmarke (260) durch die in das Ohr (E) geschnittene Öffnung hindurchgezogen wurde.

10. Verfahren nach Anspruch 9. das weiterhin nach dem Schritt des Abstreifens den Schritt des Lösens des Einführelements (230, 240, 250) von den Griffelementen (202, 204) umfasst.

11. Verfahren nach Anspruch 9, das weiterhin den Schritt des Schwenkens des Einführelements (230. 240, 250) umfasst, während es durch die federnd vorgespannten Spitzenverlängerungen (212) hindurchgeführt wird.

12. verfahren nach Anspruch 9. das weiterhin als Reaktion auf das Einführelement (230, 240, 250), das durch die Spitzenverlängerungen (212) hindurchgeführt wird. den Schritt des Auseinanderspreizens von federnd vorgespannten Stützverlängerungen (216) umfasst, die sich an dem ersten distalen Ende des Paars Griffelemente (202. 204) befinden.

## Revendications

1. Outil d'installation d'étiquettes d'oreilles (200) pour installer une étiquette d'oreille (260) sur une oreille (E) d'un animal, ledit outil comprenant un premier organe de poignée (204) ayant des extrémités proximale et distale, un deuxième organe de poignée (202) ayant des extrémités proximale et distale et relié, de façon pivotante, audit premier organe de poignée, de sorte que lesdits organes de poignée sont mobiles entre une position ouverte et une position fermée, une tête (218) montée, de façon pivotante, sur ladite extrémité distale dudit deuxième organe de poignée, **caractérisé en ce que** ledit outil, en outre, comprend :
- un organe d'insertion (230, 240, 250) ayant une extrémité de coupe distale (234, 236) et une extrémité proximale connectée à ladite tête (218), ledit organe d'insertion étant adapté à recevoir une partie de l'étiquette d'oreille (E) au cours de son installation ; et
- ledit premier organe de poignée (204) ayant des premiers moyens résilients (210), ménagés à ladite extrémité distale de celui-ci, pour recevoir ledit organe d'insertion (230, 240, 250) à travers ceux-ci, lesdits premiers moyens résilients (210) étant répartis de part et d'autre en réagissant à l'insertion à travers ceux-ci dudit organe d'insertion au cours de l'installation de l'étiquette d'oreille (E).

2. Outil tel que le décrit la revendication 1, pour lequel :
- ledit deuxième organe de poignée (202) comprend des deuxièmes moyens résilients (216), à ladite deuxième extrémité de celui-ci, qui sont répartis de part et d'autre en réagissant au pivotement de ladite tête (218) lorsque ledit organe d'insertion (230, 240, 250) est inséré à travers lesdits premiers moyens résilients (210).

3. Outil selon la revendication 1, pour lequel :
- ledit organe d'insertion (230, 240, 250) comporte une fente (238) ménagée dans celui-ci pour recevoir la partie de l'étiquette d'oreille (E).

4. Outil selon la revendication 1, en outre, comprenant :
- un organe de ressort (208), disposé, de façon transversale, entre lesdits premier et deuxième organes de poignée (204, 202) pour solliciter lesdits organes de poignée vers la position ouverte et fournir une force résiliente contre lesdits organes de poignée lorsqu'ils sont déplacés vers la position fermée.

5. Outil selon la revendication 1, pour lequel :
- ladite extrémité proximale dudit organe d'insertion (230, 240, 250) comporte un bord chanfreiné (252).

6. Outil selon la revendication 1, pour lequel :
- lesdits premiers moyens résilients (210) comportent des fentes (298), ménagées dans ceux-ci, qui se conforment audit organe d'insertion lorsqu'il est inséré à travers celui-ci.

7. Outil selon la revendication 1, pour lequel :
- ledit organe d'insertion (230, 240, 250) est de forme cylindrique.

8. Outil selon la revendication 1, pour lequel :
- ladite tête (218) comprend, en outre, une extension de tête (224) s'étendant depuis celle-ci ; et
- ledit organe d'insertion (230, 240, 250) comporte une deuxième fente (254) dimensionnée pour recevoir ladite extension de tête (224).

9. Procédé d'installation d'une étiquette d'oreille (260) sur l'oreille (E) d'un animal, ledit procédé comprenant les étapes consistant à : prévoir une paire d'organes de poignée (202, 204) ayant des première et deuxième extrémités distales mobiles entre une position ouverte, dans laquelle les extrémités distales sont espacées l'une de l'autre, et une position fermée, dans laquelle lesdites-extrémités distales sont adjacentes l'une à l'autre ; monter un organe d'insertion (230, 240, 250) sur la première extrémité distale de la paire d'organes de poignée (202, 204) ; **caractérisé en ce que** ledit procédé comprend, en outre, les étapes consistant à :
- connecter une partie (266, 296) de l'étiquette d'oreille (260) sur l'organe d'insertion (230, 240, 250) ;
- positionner les organes de poignée (202, 204) dans la position ouverte, avec la première extrémité distale sur un côté de l'oreille (E) et la deuxième extrémité distale sur l'autre côté de l'oreille (E) ;
- déplacer les organes de poignée (202, 204) vers la position fermée, de sorte que l'organe d'insertion (230, 240, 250) soit inséré en traversant des extensions en griffes (212) sollicitées, de manière résiliente, sur la deuxième extrémité distale de la paire d'organes de poignée ;
- répartir de part et d'autre les extensions en griffes (212) sollicitées de manière résiliente, lorsque les organes de poignée (202, 204) sont déplacés jusqu'à la position fermée, de telle manière que l'organe d'insertion (230, 240, 250) pénètre dans l'oreille (E) et fasse en sorte que la partie (266, 296) de l'étiquette d'oreille (260) assujettie sur l'organe d'insertion (230, 240, 250) traverse une ouverture ménagée par une découpe dans l'oreille (E) ; et
- séparer la partie (266, 296) de l'étiquette d'oreille (260) en l'arrachant de l'organe d'insertion (230, 240, 250) une fois que la partie (266, 296) de l'étiquette d'oreille (260) a traversé l'ouverture découpée dans l'oreille (E).

10. Procédé selon la revendication 9, comprenant, en outre, l'étape consistant à :
- libérer l'organe d'insertion (230, 240, 250) des organes de poignée (202, 204) après ladite étape de séparation.

11. Procédé selon la revendication 9, comprenant, en outre, l'étape consistant à :
- faire pivoter l'organe d'insertion (230, 240, 250) lorsqu'il est inséré en traversant les extensions en griffes (212) sollicitées de manière résiliente.

12. Procédé selon la revendication 9, comprenant, en outre, l'étape consistant à :
- répartir de part et d'autre des extensions de support (216), sollicitées de manière résiliente, disposées à la première extrémité distale de la paire d'organes de poignée (202, 204) en réagissant au déplacement de l'organe d'insertion (230, 240, 250) lorsqu'il est inséré en traversant les extensions en griffes (212).
